# EUROPÄISCHE PATENTSCHRIFT

(11) **EP 3 651 627 B1**
(45) Veröffentlichungstag und Bekanntmachung des Hinweises auf die Patenterteilung: **21.07.2021**
(21) Anmeldenummer: 18732743.2
(22) Anmeldetag: 19.06.2018
(51) Int. Cl.: A47L 7/00, A47L 9/24

(54) **SAUGSCHLAUCH FÜR EINEN STAUBSAUGER**
SUCTION HOSE FOR A VACUUM CLEANER
TUYAU FLEXIBLE D'ASPIRATION POUR ASPIRATEUR

(30) Priorität: 12.07.2017 DE 102017115653
(43) Veröffentlichungstag der Anmeldung: 20.05.2020
(73) Patentinhaber: Festool GmbH, 73240 Wendlingen (DE)
(72) Erfinder: MAIER, Steffen, 89264 Weißenhorn (DE)
(74) Vertreter: Patentanwälte Bregenzer und Reule Partnerschaftsgesellschaft mbB
(86) Internationale Anmeldenummer: PCT/EP2018/066195
(87) Internationale Veröffentlichungsnummer: WO 2019/011591

(56) Entgegenhaltungen:
- EP-A1- 0 985 372
- DE-A1-102012 020 546

## Beschreibung

Die Erfindung betrifft einen Saugschlauch für einen Staubsauger, insbesondere zum Betrieb mit einer Hand-Werkzeugmaschine, mit einem Schlauchabschnitt, der einen flexiblen Staubabfuhr-Schlauchkörper einen flexiblen Mantel-Schlauchkörper aufweist, in welchem der Staubabfuhr-Schlauchkörper angeordnet ist, wobei sich zwischen Längsenden des Schlauchabschnitts ein durch einen Schlauchmantel des Staubabfuhr-Schlauchkörpers begrenzter Saugstromkanal zum Führen eines Saugstroms zu dem Staubsauger erstreckt, wobei an mindestens einem Längsende des Schlauchabschnitts ein Anschlussstück zum Anschließen an die Hand-Werkzeugmaschine oder den Staubsauger angeordnet ist, und wobei sich der Mantel-Schlauchkörper und der Staubabfuhr-Schlauchkörper einen Innenraum einer Schlauchaufnahme des Anschlussstücks hinein erstrecken, sodass der Staubabfuhr-Schlauchkörper bis in die Schlauchaufnahme hinein durch den Mantel-Schlauchkörper ummantelt ist. Die Erfindung betrifft ferner ein Verfahren zur Herstellung eines derartigen Saugschlauchs.

Ein derartiger Saugschlauch ist beispielsweise in EP 0 985 372 A1 und DE 10 2012 020546 A1 dargestellt. Es gestaltet sich aber schwierig, den Schlauchabschnitt mit dem Anschlussstück zu verbinden. Insbesondere muss der Mantel-Schlauchkörper in die Schlauchaufnahme eingeführt und dort zuverlässig gehalten werden.
Es ist daher die Aufgabe der vorliegenden Erfindung, eine geeignete Verbindung zwischen Schlauchabschnitt und Anschlussstück bereitzustellen.
Zur Lösung der Aufgabe ist bei einem Saugschlauch der eingangs genannten Art vorgesehen, dass in der Schlauchaufnahme ein Montageabschnitt des Staubabfuhr-Schlauchkörpers vor den Mantel-Schlauchkörper vorsteht, und dass an einer Außenmantelfläche des Mantel-Schlauchkörpers ein Halteelement befestigt ist, welches eine zum Montageabschnitt des Staubabfuhr-Schlauchkörpers hin freie Stirnseite des Mantel-Schlauchkörpers überdeckt und das Halteelement an einer Innenfläche der Schlauchaufnahme anliegt.

Das erfindungsgemäße Verfahren zur Herstellung eines Saugschlauchs für einen Staubsauger, insbesondere zum Betrieb mit einer Hand-Werkzeugmaschine, wobei der Saugschlauch einen Schlauchabschnitt aufweist, der einen flexiblen Staubabfuhr-Schlauchkörper einen flexiblen Mantel-Schlauchkörper aufweist, in welchem der Staubabfuhr-Schlauchkörper angeordnet ist, wobei sich zwischen Längsenden des Schlauchabschnitts ein durch einen Schlauchmantel des Staubabfuhr-Schlauchkörpers begrenzter Saugstromkanal zum Führen eines Saugstroms zu dem Staubsauger erstreckt, wobei an mindestens einem Längsende des Schlauchabschnitts ein Anschlussstück zum Anschließen an die Hand-Werkzeugmaschine oder den Staubsauger angeordnet ist, und wobei sich der Mantel-Schlauchkörper und der Staubabfuhr-Schlauchkörper einen Innenraum einer Schlauchaufnahme des Anschlussstücks hinein erstrecken, sodass der Staubabfuhr-Schlauchkörper bis in die Schlauchaufnahme hinein durch den Mantel-Schlauchkörper ummantelt ist, sieht vor:
- Anordnen des Mantel-Schlauchkörpers und des Staubabfuhr-Schlauchkörpers aneinander oder Ablängen des Mantel-Schlauchkörpers derart, dass in der Schlauchaufnahme ein Montageabschnitt des Staubabfuhr-Schlauchkörpers vor den Mantel-Schlauchkörper vorsteht,
- Befestigen eines Halteelements an einer Außenmantelfläche des Mantel-Schlauchkörpers ein Halteelement derart, dass das Halteelement eine zum Montageabschnitt des Staubabfuhr-Schlauchkörpers hin freie Stirnseite des Mantel-Schlauchkörpers überdeckt und
- Einstecken des Montageabschnitts und des Mantel-Schlauchkörpers mit dem Halteelement in die Schlauchaufnahme, sodass das Halteelement an einer Innenfläche der Schlauchaufnahme anliegt.

Die Erfindung betrifft ferner ein System mit einem Saugschlauch sowie einem Staubsauger und/oder einer Hand-Werkzeugmaschine als einem Endgerät.

Es ist ein Grundgedanke der vorliegenden Erfindung, dass der Mantel-Schlauchkörper anhand eines Halteelements sozusagen teilweise ummantelt bzw. vorfixiert wird, indem nämlich seine freie, zur Schlauchaufnahme vorstehende Stirnseite durch das Halteelement sozusagen ganz oder teilweise überdeckt wird, so dass der Schlauchabschnitt in die Schlauchaufnahme besser eingesteckt werden kann. Zudem gibt das Halteelement dem Mantel-Schlauchkörper einen Halt.

Es kann vorgesehen sein, dass das Halteelement den Mantel-Schlauchkörper in Richtung des Staubabfuhr-Schlauchkörpers komprimiert. Das Halteelement kann den Mantel-Schlauchkörper sozusagen verengen oder dessen Durchmesser verkleinern, so dass das Einstecken in die Schlauchaufnahme leichter gelingt.

Unter "Einstecken" soll vorzugsweise auch "Einschrauben" verstanden werden. Eine Einschraubbewegung bzw. Schraubbewegung von Anschlussstück und Schlauchabschnitt relativ zueinander ist nämlich eine Steckbewegung mit überlagerter Drehbewegung. In jedem Fall gelingt die Montage von Schlauchabschnitt und Anschlussstück aneinander leichter, wenn das Halteelement den Mantel-Schlauchkörper hält bzw. vorfixiert.

Vorteilhaft ist vorgesehen, dass sich das Halteelement über den gesamten Umfang oder über einen Teilumfang des Mantel-Schlauchkörpers erstreckt. Dabei ist es beispielsweise möglich, dass das Halteelement einen oder mehrere Teilumfänge des Mantel-Schlauchkörpers überdeckt. Beispielsweise hat das Halteelement entsprechende Ringsegmente oder Winkelsegmente, kann also segmentiert sein. Dabei ist es weiterhin möglich, dass das Halteelement im Bereich des Mantel-Schlauchkörpers einen durchgehenden Körper bzw. eine durchgehende Wandfläche darstellt, während es im Bereich des Montageabschnitts des Staubabfuhr-Schlauchkörpers auch Aussparungen, Schlitze oder dergleichen aufweisen kann.

Zweckmäßig ist es, wenn das Halteelement im am Mantel-Schlauchkörper montierten Zustand eine ringförmige oder hülsenförmige Gestalt aufweist. Das Halteelement kann also beispielsweise eine Hülse, ein Ring oder dergleichen sein. Es ist aber auch möglich, dass das Halteelement zunächst eine bandartige Gestalt aufweist, d.h. beispielsweise als ein Halteband ausgestaltet ist, welches um das freie Ende des Mantel-Schlauchkörpers herum "gelegt" oder montiert wird, so dass es im montierten Zustand erst eine ringförmige oder hülsenförmige Gestalt aufweist.

Ein vorteilhaftes Konzept sieht vor, dass Halteelement ein durch das Anschlussstück bei der Montage des Anschlussstücks an dem Schlauchabschnitt, insbesondere plastisch und/oder flexibel, verformbares Halteelement ist. Das Halteelement gibt also bei der Montage des Anschlussstücks an dem Schlauchabschnitt (oder umgekehrt) nach und passt sich beispielsweise der Innenumfangskontur des Anschlussstückes an. Dabei kann beispielsweise eine Gewindekontur, eine Spiralkontur, eine Stufenkontur oder dergleichen in das Halteelement sozusagen "eingeprägt" werden. Das Halteelement kann beides sein, nämlich plastisch und flexibel verformbar. Mithin ist es also möglich, dass das Halteelement dauerhaft die Verformung bei der Montage von Anschlussstück und Schlauchabschnitt aneinander beibehält. Denkbar und in der Praxis vorteilhaft ist beispielsweise ein Halteelement aus Metall oder teilweise aus Metall. Aber auch ein Kunststoffelement als Halteelement kann eine dauerhafte und/oder flexible Verformung bei der Montage von Anschlussstück und Schlauchabschnitt aneinander erfahren.

Es ist eine zweckmäßige Maßnahme, dass das Halteelement an dem Mantel-Schlauchkörper und/oder dem Staubabfuhr-Schlauchkörper, insbesondere durch eine Verklebung oder eine Klebeschicht, befestigt ist. So kann beispielsweise das Ende des Mantel-Schlauchkörpers, welches durch das Halteelement überdeckt wird, mit einem flüssigen Klebstoff oder einem pastösen Klebstoff versehen werden, bevor das Halteelement befestigt wird. Es ist auch eine Kombination derart möglich, dass einerseits Klebstoff auf den Mantel-Schlauchkörper aufgebracht wird, andererseits das Halteelement eine Klebeschicht aufweist. Die Klebeschicht kann beispielsweise durch einen Abdeckkörper, beispielsweise eine Schutzfolie oder dergleichen, abgedeckt sein, bevor das Halteelement auf den Mantel-Schlauchkörper aufgebracht wird.

Alternativ zu der Verklebung eignet sich aber auch eine Verschweißung, eine formschlüssige Verbindung beispielsweise mit Nieten oder dergleichen, um das Halteelement am Mantel-Schlauchkörper zu befestigen.

In gleicher Weise kann das Halteelement aber auch am Staubabfuhr-Schlauchkörper befestigt werden, d.h. beispielsweise verklebt, verschweißt oder dergleichen.

Ein vorteilhaftes Konzept sieht vor, dass das Halteelement sich parallel zur Längserstreckung des Saugstromkanals zumindest über einen Teilabschnitt des Montageabschnitts des Staubabfuhr-Schlauchkörpers erstreckt. Das Halteelement ist zweckmäßigerweise also nicht nur an dem Mantel-Schlauchkörper, sondern auch am Staubabfuhr-Schlauchkörper angeordnet. Mit dem Staubabfuhr-Schlauchkörper ist das Halteelement zweckmäßigerweise fest verbunden, beispielsweise verklebt, verschweißt oder dergleichen. Das Halteelement überdeckt in Bezug auf die Längserstreckung des Staubabfuhrkanals und/oder entlang einer Längsachse oder parallel zu einer Längsachse des Anschlussstücks (die auch die Steckachse sein kann) sich etwa gleich weit auf den Mantel-Schlauchkörper und dem Staubabfuhr-Schlauchkörper. Somit ist eine gleichmäßige und gleichmäßig feste Verbindung und/oder Abstützung des Halteelements am Mantel-Schlauchkörper und am Staubabfuhr-Schlauchkörper möglich.

Vorteilhaft ist vorgesehen, dass das Halteelement im Bereich der freien Stirnseite des Mantel-Schlauchkörpers eine Rampe zum Aufgleiten des Anschlussstücks auf den Mantel-Schlauchkörper bei der Montage, insbesondere beim Aufstecken oder Aufschrauben, des Anschlussstücks an dem Schlauchabschnitt aufweist. Beispielsweise erstreckt sich die Rampe sozusagen vom Montageabschnitt nach radial außen auf den Mantel-Schlauchkörper bzw. dessen Außenmantelfläche hinauf.

An dieser Stelle sei erwähnt, dass das Anschlussstück und/oder der Schlauchabschnitt vorteilhaft einen im Wesentlichen kreisrunden Querschnitt aufweisen. Alternativ ist aber auch ein elliptischer oder polygoner oder ovaler Querschnitt von Anschlussstück und/oder Schlauchabschnitt möglich. Selbstverständlich kann der Querschnitt durch Verformung, beispielsweise durch eine Lastbeaufschlagung, ein Knicken des Saugschlauches oder dergleichen, veränderbar sein. Insbesondere im Bereich des Anschlussstücks sind zweckmäßigerweise mehrere im Wesentlichen kreisrunde Querschnitte von Anschlussstück und Schlauchabschnitt möglich. Es können weiterhin mehrere Querschnittskonturen an verschiedenen Längsabschnitten des Saugschlauchs vorgesehen sein.

Ein vorteilhaftes Konzept sieht vor, dass das Halteelement einen Bandkörper, insbesondere ein Klebeband oder ein Kunststoffklebeband oder ein Metallklebeband, umfasst oder dadurch gebildet ist. Das Klebeband, das beispielsweise aus Kunststoff und/oder Metall besteht, also auch ein Sandwich-Klebeband sein kann, lässt sich leicht auf den Mantel-Schlauchkörper aufbringen. Dazu kann das Klebeband auch eine Kompressionswirkung haben, wenn es entsprechend fest auf den Mantel-Schlauchkörper aufgebracht wird. Der Bandkörper kann aber auch ohne eine Klebeschicht ausgestattet sein. Beispielsweise kann der Klebstoff, wie erwähnt, auf den Mantel-Schlauchkörper und/oder den Staubabfuhr-Schlauchkörper aufgebracht werden und dann das an sich zunächst nicht klebefähige Band an den beiden Komponenten oder einer davon befestigt werden.

Zweckmäßigerweise ist vorgesehen, dass das Halteelement einen Metallkörper, insbesondere ein Blechteil und/oder ein Klebeband aus Metall umfasst oder dadurch gebildet ist. Weiterhin möglich ist es, dass das Halteelement einen Metallkörper, beispielsweise einen Metallblech-Körper oder dergleichen umfasst. So ist beispielsweise eine Metall-Tülle ohne weiteres möglich. Die Metall-Tülle oder der Metallkörper allgemein können durch die Montage von Schlauchabschnitt und Anschlussstück aneinander verformt werden.

Ein vorteilhaftes Konzept sieht vor, dass das Halteelement ein Schrumpfkörper ist, welcher durch thermische Behandlung, insbesondere Erwärmung, auf den Mantel-Schlauchkörper zu einem Halten an dem Mantel-Schlauchkörper und/oder dem Staubabfuhr-Schlauchkörper aufgeschrumpft ist. Weiterhin ist es möglich, dass das Halteelement einen Schrumpfkörper umfasst oder ein Schrumpfkörper ist. So kann beispielsweise eine thermische Behandlung, insbesondere eine Erwärmung, dazu führen, den Schrumpfkörper soweit zu verkleinern in Bezug auf seine Dimension, dass er auf dem Mantel-Schlauchkörper oder dem Staubabfuhr-Schlauchkörper oder beiden hält. Insbesondere kann sich der Schrumpfkörper bis zu dem Montageabschnitt erstrecken oder einen Teilbereich des Montageabschnitts überdecken, so dass er gleichzeitig an beiden Schlauchkörpern durch seine Schrumpf-Behandlung oder thermische Behandlung Halt findet. Zusätzlich zu der thermischen Behandlung kann selbstverständlich auch eine Verklebung vorgesehen sein.

Weiterhin ist es vorteilhaft, wenn das Halteelement elektrisch leitfähig ist.

Zweckmäßigerweise ist vorgesehen, dass das Halteelement zur Herstellung einer elektrischen Verbindung zwischen mindestens zwei der Komponenten Anschlussstück, Mantel-Schlauchkörper und Staubabfuhr-Schlauchkörper elektrisch leitfähig ist, insbesondere eine elektrisch leitfähige Beschichtung aufweist. Das Halteelement stellt sozusagen eine elektrische Verbindung zwischen beispielsweise dem Mantel-Schlauchkörper und dem Anschlussstück oder dem Staubabfuhr-Schlauchkörper und dem Mantel-Schlauchkörper oder dem Staubabfuhr-Schlauchkörper und dem Anschlussstück bereit.

Somit kann also beispielsweise eine antistatische Verbindung bzw. eine leitfähige Verbindung zur Ableitung von statischen Aufladungen hergestellt werden. So kann beispielsweise der Saugschlauch über den Schlauchabschnitt hinweg elektrisch leitfähig sein und durch das ebenfalls elektrisch leitfähige Anschlussstück mit dem Staubsauger zur Erdung oder anderweitigen elektrischen Verbindung verbunden sein.

Die elektrisch leitfähige Beschichtung oder Leitfähigkeit des Halteelements kann aber auch dazu genutzt werden, beispielsweise elektrische Signale, insbesondere Steuersignale, Abschaltsignale oder dergleichen, über den Saugschlauch zu kommunizieren.

Ein vorteilhaftes Konzept sieht vor, dass das Halteelement eine elektrisch leitfähige Metallfolie aufweist oder dadurch gebildet ist. Die elektrisch leitfähige Metallfolie kann beispielsweise einen Bestandteil eines Klebebands sein oder als Folienkörper ausgestaltet sein, der ohne eigene Klebeeigenschaft ausgestattet ist. Die Metallfolie eignet sich insbesondere dazu, plastisch verformt zu werden, wenn das Anschlussstück und der Schlauchabschnitt miteinander verbunden oder aneinander montiert werden.

Es ist zweckmäßig, wenn der Staubabfuhr-Schlauchkörper und/oder der Mantel-Schlauchkörper elektrisch leitfähig ist und/oder einen elektrisch leitfähigen Kunststoff aufweist oder dadurch gebildet ist und/oder mindestens einen elektrisch leitfähigen Draht aufweist. Selbstverständlich wäre es auch möglich, dass zwischen dem Staubabfuhr-Schlauchkörper und dem Mantel-Schlauchkörper oder an anderer Stelle des Schlauchabschnitts ein elektrischer Leiter, beispielsweise ein Draht oder dergleichen, angeordnet ist. Vorteilhaft ist jedoch eine metallische Beschichtung, eine Kohlefaser-Applikation oder dergleichen, um die Schlauchkörper elektrisch leitfähig auszugestalten.

Zweckmäßigerweise ist vorgesehen, dass der Schlauchmantel des Staubabfuhr-Schlauchkörpers mindestens eine Kunststoffwand und/oder mindestens einen Verstärkungskörper und/oder mindestens eine Verstärkungsspirale, insbesondere aus Metall oder gegenüber einer Basiswand des Schlauchmantels steiferem Kunststoff, und/oder mindestens eine, insbesondere spiralig verlaufende, Rippenstruktur aufweist. Der Schlauchmantel kann beispielsweise eine elektrisch leitfähige oder nicht elektrisch leitfähige Kunststoffwand aufweisen. Weiterhin kann eine Verstärkungsspirale, beispielsweise ein Draht oder dergleichen, in das Material des Schlauchmantels eingebettet sein. Der Schlauchmantel des Staubabfuhr-Schlauchkörpers kann auch eine Rippenstruktur, beispielsweise eine Spirale oder dergleichen, aufweisen. Dadurch ist er einerseits versteift, andererseits biegefähig und verformbar.

Ohne weiteres ist es möglich, dass auch der Mantel-Schlauchkörper eine Kunststoffwand und/oder einen Verstärkungskörper und/oder eine Rippenstruktur aufweist. Bevorzugt ist es jedoch, wenn der Mantel-Schlauchkörper eine im Vergleich zum Staubabfuhr-Schlauchkörper glattere Struktur aufweist. An dieser Stelle ist nämlich zu erwähnen, dass der Mantel-Schlauchkörper beispielsweise eine Rippenstruktur oder sonstige zu einem Verhaken neigende Struktur des Staubabfuhr-Schlauchkörpers ummantelt. Dadurch ist die Handhabung einfacher. Der Mantel-Schlauchkörper kann beispielsweise aus einem Textilmaterial bestehen oder eine glatte Kunststoffoberfläche aufweisen. Der Mantel-Schlauchkörper kann im Vergleich zu dem Staubabfuhr-Schlauchkörper weicher und/oder leichter verformbar sein. Der Mantel-Schlauchkörper bildet sozusagen eine Hülle für den Saugstrom-Schlauchkörper. Mithin ist der Saugstrom-Schlauchkörper vorzugsweise steifer als der Mantel-Schlauchkörper.

Der Mantel-Schlauchkörper weist beispielsweise eine Kunststofffolie oder eine Kunststoffwand auf. Andere Materialien, die vorzugsweise glatter oder weniger rau als eine Außenkontur des Saugstrom-Schlauchkörpers sind, sind bei dem Mantel-Schlauchkörper ebenfalls möglich.

Ein vorteilhaftes Konzept sieht vor, dass der Mantel-Schlauchkörper aus Textilfasern besteht und/oder ein Textilgeflecht aufweist und/oder als ein Multifilament bestehend aus härteren und weicheren, miteinander verflochtenen Fasern ausgebildet ist. Der Mantel-Schlauchkörper weist beispielsweise ein Geflecht aus Kunststofffasern, insbesondere aus Polyamidfasern und/oder Polyesterfasern auf. Bevorzugt ist es, wenn der Mantel-Schlauchkörper als ein Multifilament oder ein Gewebe aus unterschiedlichen Fasern ausgestaltet ist, beispielsweise aus Textilfasern und Kunststofffasern, aus härteren und weicheren Fasern oder dergleichen. So können beispielsweise die härteren und weicheren Fasern aus Polyamid und Polyester sein. Auch der Durchmesser der Fasern kann dazu beitragen, dass sie härter oder weicher sind. Es ist möglich, dass der Saugstrom-Schlauchkörper in den Mantel-Schlauchkörper eingesteckt oder in sonstiger Weise darin angeordnet wird. Bevorzugt ist es jedoch, wenn der Mantel-Schlauchkörper durch eine Umflechtung oder ein Umflechten des Saugstrom-Schlauchkörpers gebildet ist. Mithin wird also das Gewebe des Mantel-Schlauchkörpers um den Saugstrom-Schlauchkörper herum geflochten.

Zweckmäßigerweise ist vorgesehen, dass die zum Montageabschnitt des Staubabfuhr-Schlauchkörpers hin freie Stirnseite des Mantel-Schlauchkörpers einen kleineren Durchmesser aufweist als ein von dem Montageabschnitt des Staubabfuhr-Schlauchkörpers entfernterer Abschnitt des Mantel-Schlauchkörpers aufweist, wobei der kleinere Durchmesser insbesondere anhand einer thermischen Bearbeitung und/oder durch ein Ablängen und/oder ein Verschweißen des Mantel-Schlauchkörpers hergestellt ist. Beispielsweise wird ein Kunststoff-Material des Mantel-Schlauchkörpers, beispielweise ein Kunststoff-Textilgewebe, eine Kunststoff-Folie oder dergleichen, durch eine Ablängung, eine gesonderte thermische Bearbeitung, beispielsweise Erwärmung oder dergleichen, sozusagen geschrumpft, so dass dadurch die Stirnseite zum Montageabschnitt des Staubabfuhr-Schlauchkörpers ausgebildet ist. Diese Stirnseite jedenfalls ist verengt oder weist eine Schrumpfung auf. Weiterhin ist es möglich, dass der Mantel-Schlauchkörper durch eine Umflechtung des Staubabfuhr-Schlauchkörpers hergestellt ist. Die freien Enden der einzelnen Fasern werden beispielsweise thermisch abgeschnitten, um die Stirnseite zum Montageabschnitt auszubilden bzw. den Mantel-Schlauchkörper abzulängen. Bei diesem thermischen Abschneiden entsteht ein Verschweißungseffekt oder ein Schrumpfungseffekt, der zu der vorgenannten Maßnahme vorteilhaft beiträgt oder sie bildet.

Ein vorteilhaftes Konzept sieht vor, dass zumindest der Montageabschnitt des Staubabfuhr-Schlauchkörpers, vorzugsweise auch der Mantel-Schlauchkörper, in einer Haltehülse des Anschlussstücks aufgenommen ist, die in einer Halteaufnahme eines von der Haltehülse separaten Steckkörpers des Anschlussstücks, insbesondere frei drehbar, aufgenommen ist und insbesondere durch einen hülsenförmigen oder ringförmigen Haltekörper an dem Steckkörper gehalten ist, wobei der Steckkörper einen Steckabschnitt zum Anstecken an, insbesondere zum Einstecken in, eine Steckaufnahme der Hand-Werkzeugmaschine oder des Staubsaugers aufweist. Die Haltehülse kann fest oder drehbar in dem Steckkörper angeordnet sein. Der Steckkörper hat beispielsweise einen Steckvorsprung oder eine Steckaufnahme. Es ist auch möglich, dass der Steckkörper beides hat, nämlich einen Steckvorsprung und eine Steckaufnahme. Weiterhin kann der Stecckörper auch ein Schraubkörper sein oder einen Schraubkörper umfassen. Der Schraubkörper ist mit einer Schraubkontur am Schlauchanschluss des Staubsaugers oder der Hand-Werkzeugmaschine verschraubbar. Beispielsweise kann an einem Steckabschnitt des Steckkörpers eine Schraubkontur angeordnet sein.

Die Haltehülse kann insbesondere dann, wenn sie verklebt wird, auch fest in dem Steckkörper angeordnet sein.

Es ist auch möglich, dass die Haltehülse beispielsweise anhand von Rastmitteln mit dem Steckkörper verrastet wird. So können beispielsweise der Steckkörper und/oder die Haltehülse mindestens einen Rastvorsprung und/oder eine Rastaufnahme aufweisen. Die Haltehülse kann bei einer Verrastung fest oder drehbar an dem Steckkörper angeordnet sein.

Zweckmäßigerweise ist vorgesehen, dass die Schlauchaufnahme eine Aufnahmeöffnung zum Einstecken des Schlauchabschnitts und einen von der Aufnahmeöffnung entfernteren Bodenbereich oder Endbereich aufweist, wobei die Aufnahmeöffnung einen größeren Querschnitt aufweist als der Bodenbereich oder Endbereich und/oder sich der Innenraum von der Aufnahmeöffnung her zu dem Bodenbereich oder Endbereich hin verengt, insbesondere konisch verläuft. Der Querschnitt ist beispielsweise kreisförmig oder rund. Zwischen der Aufnahmeöffnung und dem Bodenbereich oder Endbereich kann ein konischer Verlauf vorgesehen sein. Mithin ist also beispielsweise die Schlauchaufnahme als Ganzes konisch. Es ist aber auch eine stufige Gestalt möglich, so dass beispielsweise die Aufnahmeöffnung einen größeren Querschnitt oder Durchmesser aufweist, und zwischen der Schlauchaufnahme und dem Bodenbereich oder Endbereich der Schlauchaufnahme mindestens eine Stufe vorgesehen ist. Weiterhin ist es möglich, dass nur der Bodenbereich einen engen Innenumfang aufweist, beispielsweise für den Montageabschnitt des Staubabfuhr-Schlauchkörpers, während die Aufnahmeöffnung einen größeren Durchmesser aufweist.

Vorteilhaft ist vorgesehen, dass die Schlauchaufnahme mindestens einen Gewindeabschnitt zum Einschrauben einer am Außenumfang des Staubabfuhr-Schlauchkörpers angeordneten Schraubkontur aufweist. Wie bereits erwähnt kann beispielsweise der Staubabfuhr-Schlauchkörper am Außenumfang eine spiralige oder spiralförmige Verstärkung aufweisen, beispielsweise integral in den Schlauchkörper eingeformte Rippen oder Gewindekonturen. Es kann auch ein Verstärkungskörper, beispielsweise eine Drahtspirale, bei dem Staubabfuhr-Schlauchkörper vorgesehen sein. Diese sozusagen natürlichen oder ohnehin vorhandenen Gewindeabschnitte oder Schraubkonturen des Staubabfuhr-Schlauchkörpers werden beispielsweise dazu genutzt, mit dem Gewindeabschnitt der Schlauchaufnahme verschraubt zu werden. Im Bereich des Montageabschnitts des Staubabfuhr-Schlauchkörpers liegt die Schraubkontur frei und eignet sich zur Verschraubung mit dem Gewindeabschnitt.

Zweckmäßigerweise ist vorgesehen, dass das mindestens eine Halteelement im Bereich des Gewindeabschnitts angeordnet und durch den Gewindeabschnitt schraubenförmig verformt ist. Das Halteelement ist beispielsweise plastisch oder elastisch verformbar und wird durch den Gewindeabschnitt der Haltehülse oder der Schlauchaufnahme verformt.

Vorteilhaft ist vorgesehen, dass der Gewindeabschnitt im Bereich einer zum Einführen des Schlauchabschnitts vorgesehenen Aufnahmeöffnung der Schlauchaufnahme einen größeren Durchmesser als an einem von der Aufnahmeöffnung entfernteren Bodenbereich oder Endbereich der Schlauchaufnahme aufweist. Die Gewindekonturen oder Schraubkonturen des Gewindeabschnitts weisen beispielsweise eine kontinuierliche Verengung auf.

Es ist möglich, dass einzelne oder mindestens eine Windung des Gewindeabschnitts, insbesondere im Bereich der Aufnahmeöffnung oder unmittelbar an der Aufnahmeöffnung, keine Verengung aufweist und sich daran eine in Richtung des Bodenbereichs oder Endbereichs anschließende Gewindekontur vorgesehen ist, die eine Verengung aufweist. Die im Bereich der Aufnahmeöffnung größeren Durchmesser oder Gewindestrukturen ermöglichen eine leichte Montage beispielsweise der vorgenannten Haltehülse oder des Anschlussstücks an dem Schlauchabschnitt. Insbesondere ermöglichen die relativ weiten Windungen im Bereich der Aufnahmeöffnung oder der größere Durchmesser der Aufnahmeöffnung, dass diese sozusagen auf das Halteelement und insbesondere den Mantel-Schlauchkörper sozusagen aufgleitet.

An der Gewindekontur oder einer sonstigen Stelle der Schlauchaufnahme kann beispielsweise ein Kontaktvorsprung, eine Kontaktfläche oder dergleichen zur Herstellung einer elektrischen Verbindung mit dem Halteelement und/oder mindestens einem der Schlauchkörper vorgesehen sein.

An dieser Stelle sei noch erwähnt, dass das Halteelement vorteilhaft eine wesentlich kleinere Dicke oder Stärke aufweist als der Mantel-Schlauchkörper oder der Saugstrom-Schlauchkörper, beispielsweise aus einem Material mit maximal einem Drittel der Dicke von einem der beiden vorgenannten Schlauchkörper aufweist.

Nachfolgend wird ein Ausführungsbeispiel der Erfindung anhand der Zeichnung erläutert. Es zeigen:
- Figur 1: eine perspektivische Schrägansicht eines Staubsaugers mit erfindungsgemäßem Saugschlauch,
- Figur 2: eine Hand-Werkzeugmaschine mit angeschlossenem Saugschlauch gemäß der Erfindung von der Seite,
- Figur 3: eine Schnittdarstellung des Saugschlauchs gemäß Figur 1 entsprechend etwa einer Schnittebene A,
- Figur 4: ein Detail D1 aus Figur 3,
- Figur 5: ein Detail D2 aus Figur 3,
- Figur 6: eine Explosionsdarstellung von Anschlussstücken des Saugschlauchs gemäß Figur 1,
- Figur 7: ein Winkelstück für den Saugschlauch gemäß Figur 1, 3,
- Figur 8: ein Längsende eines Schlauchabschnitts mit einem Schrumpfkörper im noch nicht geschrumpften Zustand, und
- Figur 9: die Ansicht gemäß Figur 8, jedoch mit geschrumpftem Schrumpfkörper.

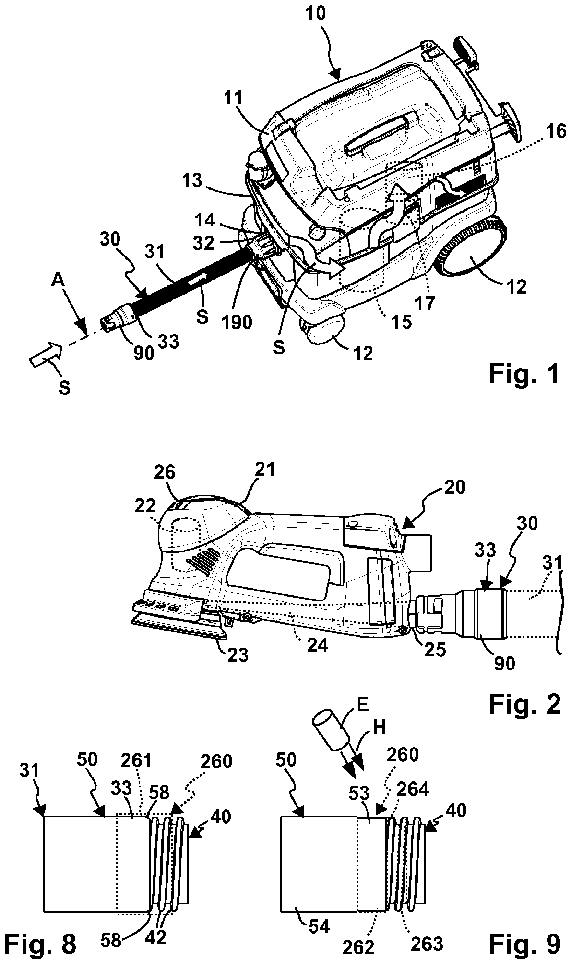

Ein Staubsauger 10 weist ein Staubsaugergehäuse 11 auf, welches mobil ist. Der Staubsauger 11 ist ein mobiler Staubsauger und steht exemplarisch für einen Staubsauger, der beispielsweise als Werkstattsauger vor Ort eingesetzt werden kann und mobil ist. Der Staubsauger 10 ist auf einem Untergrund rollbar, wofür Rollen 12 vorgesehen sind. Der Staubsauger 10 steht exemplarisch für andere mobile Staubsauger, beispielsweise auch für solche, die in einer Transportbox angeordnet sind oder ein Gehäuse in der Art einer Transportbox aufweisen. Die Transportbox ist zweckmäßigerweise mit anderen Transportboxen verknüpfbar, beispielsweise stapelbar und/oder formschlüssig verbindbar und/oder verriegelbar. Derartige Transportboxen dienen dann vorzugsweise zur Aufnahme von Werkzeugmaschinen in der Art der in Figur 2 dargestellten Hand-Werkzeugmaschine 20.

Die Hand-Werkzeugmaschine 20 weist beispielsweise ein Maschinengehäuse 21 auf, in welchem ein Antriebsmotor 22, beispielsweise ein elektrischer oder pneumatischer Antriebsmotor, angeordnet ist. Der Antriebsmotor 22 bildet einen Bestandteil eines Antriebsstrangs, welcher optional auch ein Getriebe aufweisen kann. Mit dem Antriebsmotor 22 ist ein Arbeitswerkzeug 23 antreibbar, welches beispielsweise als Schleifscheibe ausgestaltet ist. Das Arbeitswerkzeug 23 steht exemplarisch für andere Arbeitswerkzeuge, beispielsweise spanabhebende, fräsende, schneidende, sägende oder dergleichen andere Arbeitswerkzeuge. Der Antriebsmotor 22 ist anhand eines Schalters 26 einschaltbar und ausschaltbar. Die Hand-Werkzeugmaschine 20 ist beispielsweise eine Schleifmaschine, wobei sie exemplarisch für andere Hand-Werkzeugmaschinen, beispielsweise Sägen, Fräsen, Bohrgeräte oder dergleichen steht. Bei dem Betrieb der Hand-Werkzeugmaschine 20 entsteht Staub, welcher über einen Staubabfuhrkanal 24 bis zu einem Absauganschluss 25 strömt, an den ein Saugschlauch 30 anschließbar ist. Über den Absauganschluss 25 kann beim Betrieb der Hand-Werkzeugmaschine 20 entstehender Staub, enthaltend beispielsweise Partikel, Späne oder dergleichen, abgesaugt werden.

Mit dem Saugaggregat 16 ist ein Saugstrom S erzeugbar, mit dem beim Betrieb des Arbeitswerkzeugs 23 oder der Hand-Werkzeugmaschine 20 anfallender Staub absaugbar ist.

Der Saugschlauch 30 weist einen Schlauchabschnitt 31 auf, dessen Längsenden 32, 33 mit dem Staubsauger 10 und der Hand-Werkzeugmaschine 20 lösbar verbindbar sind, insbesondere im Rahmen einer Steck-Montage, Schraub-Montage oder dergleichen. An dieser Stelle sei erwähnt, dass ein erfindungsgemäßer Saugschlauch auch fest mit zumindest einem Längsende mit einem Staubsauger oder einer Hand-Werkzeugmaschine 20 verbunden sein kann. Mithin ist also das Längsende 32 beispielsweise in eine Steckaufnahme des Saugschlauch-Anschlusses 14 eingesteckt oder auf ein entsprechendes Muffenstück oder Anschlussstück aufgesteckt. An der Hand-Werkzeugmaschine 20, also am Absauganschluss 25, ist zweckmäßigerweise eine Steckaufnahme oder ein Steckvorsprung zum Anstecken des Saugschlauchs 30 vorgesehen.

Der Saugschlauch 30 ist insgesamt flexibel, so dass die Hand-Werkzeugmaschine 20 und der Staubsauger 10 im Wesentlichen ungehindert durch den Widerstand des Saugschlauches 30 am Arbeitsort beweglich sind.

Der Schlauchabschnitt 31 weist einen Staubabfuhr-Schlauchkörper 40 auf, dessen Schlauchmantel 41 einen Saugstromkanal 45 für den Saugstrom S zu dem Staubsauger 10 begrenzt. Der Staubabfuhr-Schlauchkörper 40 erstreckt sich bis zu den jeweiligen Längsenden 32, 33 des Schlauchabschnitts 31. Der Schlauchmantel 41 ist durch Verstärkungsrippen 42 verstärkt. Die Verstärkungsrippen 42 verlaufen spiralig und bilden beispielsweise eine Verstärkungsspirale 44 aus. Die Verstärkungsspirale 44 bzw. die Verstärkungsrippen 42 ermöglichen es, dass der Staubabfuhr-Schlauchkörper 40 einerseits eine gewisse Biegesteifigkeit aufweist, dennoch eine hohe Flexibilität ermöglicht. Anhand der Verstärkungsrippen 42 bzw. der Verstärkungsspirale 44 wird der Strömungsquerschnitt des Saugstromkanals 45 auch bei einer Querbelastung quer zu einer Längserstreckung L des Saugschlauchabschnitts erhalten.

Allerdings ist die Verrippung bzw. Rippenstruktur durch die Verstärkungsrippen 42 in einiger Hinsicht auch störend. Beispielsweise führen derlei Rippen oder Vorsprünge am Schlauchkörper dazu, dass bei einer Werkstückbearbeitung durch die Hand-Werkzeugmaschine 20 das an Flächen eines Werkstücks, welches mit der Hand-Werkzeugmaschine 20 bearbeitet wird, entlang reibt und dort zu Beschädigungen führen kann. Auch an einem Werkstattuntergrund kann sich die Verrippung des Staubabfuhr-Schlauchkörpers 40 verhaken, was die Handhabung erschwert.

Zur Beseitigung dieser Problemstellung ist der Staubabfuhr-Schlauchkörper 40 sozusagen eingehüllt oder ummantelt, nämlich mit einem Mantel-Schlauchkörper 50. Der Mantel-Schlauchkörper 50 erstreckt sich zwischen den Längsenden 32, 33 des Schlauchabschnitts 31. Allerdings steht der Staubabfuhr-Schlauchkörper 40 vor den Mantel-Schlauchkörper 50 im Bereich der Längsenden 32, 33 mit Montageabschnitten 43 vor. Die Montageabschnitte 43 dienen zur Montage des Schlauchabschnitts 31 an Anschlussstücken 90, 190 und insbesondere zur zugfesten Montage bezüglich der Längserstreckung L.

Der Mantel-Schlauchkörper 50 weist einen Schlauchmantel 51 auf, der gegenüber dem Schlauchmantel 41 es Staubabfuhr-Schlauchkörpers 40 wesentlich glatter ist und somit leichter an Werkstoffoberflächen auf einem Untergrund oder dergleichen entlanggleiten kann. Der Schlauchmantel 51 weist eine dem jeweiligen Montageabschnitt 43 an den Längsenden 32, 33 des Staubabfuhr-Schlauchkörpers 40 zugewandte Stirnseite 52 auf, wo er abgelängt ist.

Beispielsweise ist der Schlauchmantel 51 als ein Textilgeflecht 55 ausgestaltet. Insbesondere ist der Staubabfuhr-Schlauchkörper 40 mit dem Schlauchmantel 51 sozusagen umsponnen oder umwebt, wodurch das Textilgeflecht 55 gebildet ist. Das Textilgeflecht 55 ist ein Multifilament mit Fasern 56, 57, die miteinander verwoben sind. Die Fasern 56, 57 weisen beispielsweise gegenläufige Orientierungen auf, so dass ein Kreuzgewebe gebildet ist. Die Fasern 56, 57 bestehen zweckmäßigerweise aus unterschiedlichem Material und/oder sind unterschiedlich stark und/oder weisen unterschiedliche Durchmesser auf. Es ist aber auch möglich, ein Textilgeflecht zu verwenden, dessen Fasern gleichartig und/oder gleichförmig sind und/oder dieselben Durchmesser aufweisen.

Vorteilhaft ist das Textilgeflecht 55 engmaschig und/oder dicht, so dass der Mantel-Schlauchkörper 50 den Staubabfuhr-Schlauchkörper 40 vollständig ummantelt und/oder der Staubabfuhr-Schlauchkörper 40 vollständig verdeckt oder überdeckt ist.

Die Anschlussstücke 90, 190 sind mehrteilig und umfassen Steckkörper 91, 191 sowie Haltehülsen 70, die an den Steckkörpern 91 gehalten sind, z.B. dort verrastet, verklebt oder von Haltekörpern 90 gehalten sind.

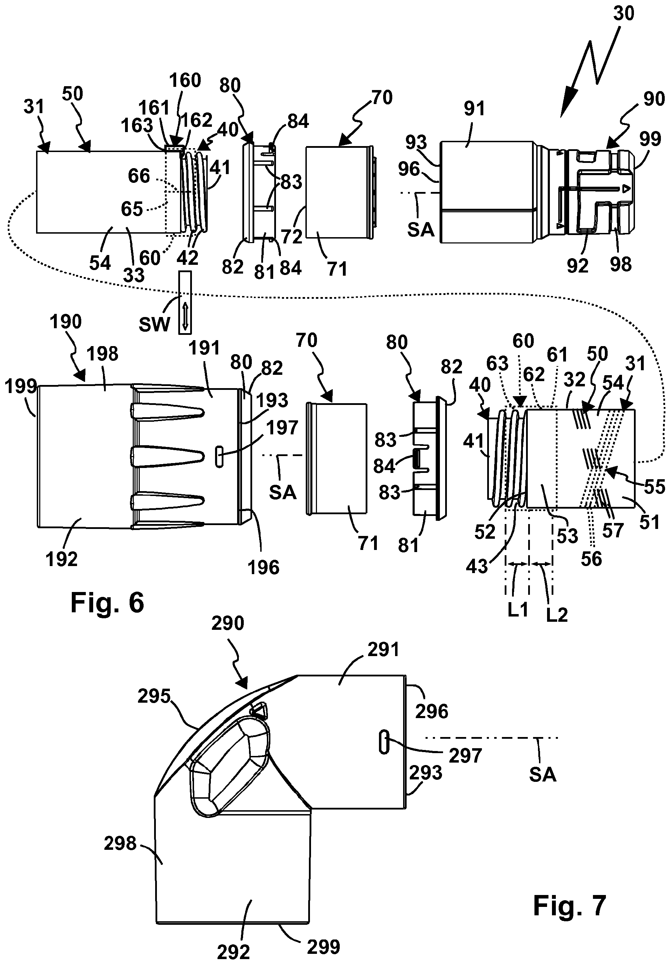

Die Haltehülsen 70 dienen zur zugfesten Montage des Schlauchabschnitts 91 an den Anschlussstücken 90, 190 sowie einem in Figur 7 dargestellten Anschlussstück 290. Die Haltehülsen 70 sind beispielsweise in Halteaufnahmen 93, 193 oder 293 der Anschlussstücke 90, 190 und 290 aufgenommen und werden dort von Haltekörpern 90 zugfest bezüglich einer Steckachse SA, entlang derer die Haltehülsen 70 in die Halteaufnahmen Steckaufnahmen 93 einsteckbar sind, zugfest gehalten.

Die Steckkörper 91, 191 und 291 weisen Steckabschnitte 292 zur Steckmontage des Saugschlauchs 30 an einer für den Saugbetrieb notwendigen Komponente, beispielsweise dem Staubsauger 10, der Hand-Werkzeugmaschine 20 sowie anderen Typen von Staubsaugern und Hand-Werkzeugmaschinen auf. Beispielsweise ist am Steckabschnitt 92 des Anschlussstücks 90 eine Steckaufnahme 99 vorgesehen, die auf einen Anschlussstutzen aufsteckbar sind, beispielsweise wie bei der Hand-Werkzeugmaschine 20. Allerdings sind auch am Außenumfang des Steckabschnitts 92 Formschlusskonturen 98 vorgesehen, die zu einem festen Halt in den Umfang einer in der Zeichnung nicht dargestellten Steckaufnahme einer anderen Hand-Werkzeugmaschine geeignet sind. Die Formschlusskonturen 98 eignen sich beispielsweise für eine Steckmontage oder Steck-Drehmontage an einer derartigen Steckaufnahme bzw. einem Absauganschluss einer Hand-Werkzeugmaschine. Mithin ist also der Steckabschnitt 92 vielfältig einsetzbar. Bevorzugt ist der Steckabschnitt 91 aus einem weicheren Material als der Abschnitt des Steckkörpers 91, an welchem die Halteaufnahme 93 vorgesehen ist.

Der Steckabschnitt 192 des Steckkörpers 191 dient z.B. zum Aufstecken oder Einstecken auf bzw. an den Saugschlauch-Anschluss 14 des Staubsaugers 10. Beispielsweise ist eine Steckaufnehme 99 am Steckabschnitt 192 vorgesehen. Selbstverständlich kann man den Steckvorsprung oder Steckabschnitt 192 auch mit seiner Umfangwand auch mit seiner Umfangswand 198, die zum freien Ende hin vorzugsweise konisch verläuft, auch in eine entsprechende Steckaufnahme einstecken, z.B. wenn der Saugschlauch-Anschluss 14 vorteilhafterweise eine Steckaufnahme zu Einstecken des Steckabschnitts 192 aufweist.

Das Anschlussstück 290 ist in Figur 7 nur teilweise dargestellt. Es umfasst noch die in Figur 7 nicht dargestellte Haltehülse 70 sowie den Haltekörper 80, die in der darüber dargestellten Figur 6 sichtbar sind. Insbesondere erstreckt sich zwischen einer für den Haltekörper 80 und die Haltehülse 70 vorgesehenen Halteaufnahme 293 und dem Steckabschnitt 292 ein Winkelabschnitt 295, so dass der Steckabschnitt 292 und die Halteaufnahme 293 zueinander winkelig sind, beispielsweise 90 Grad winkelig. Die jeweiligen Steckachsen SA und eine in Figur 7 nicht dargestellte Steckachse zum Anstecken oder Einstecken an den Staubsauger 10 oder eine Hand-Werkzeugmaschine 20 sind um 90 Grad zueinander winkelig. Eine Umfangswand 298 des Steckabschnitts 292 ist vorzugsweise zu ihrem freien Endbereich konisch, so dass sie leicht in eine Steckaufnahme, insbesondere die Steckaufnahme des Saugschlauch-Anschlusses 14 des Staubsaugers 10 einsteckbar ist.

Die Halteaufnahmen 93, 193 sowie 293 sind vorzugsweise gleichartig oder ähnlich. So bildet beispielsweise eine Stirnseite 96, 196, 296 einen Anschlag für einen Haltevorsprung 82, insbesondere einen flanschartigen Haltevorsprung, des Haltekörpers 80. Der Haltevorsprung 82 steht insbesondere flanschartig und/oder ringförmig vor eine Umfangswand 81 des Haltekörpers 80 nach radial außen vor und liegt an der Stirnseite 96, 196 oder 296 einer Umfangswand, die die Halteaufnahmen 93, 193, 293 begrenzt an.

Die Umfangswand 81 hingegen greift in die Halteaufnahme 93, 193, 293 ein. Am radialen Außenumfang der Umfangswand 81 sind vorzugsweise Stützvorsprünge 83 vorgesehen, die an einer Innenumfangswand 95, 195 der jeweiligen Halteaufnahme 93, 193, 293 anliegt. Die Innenumfangswand 95, 195 erstreckt sich von der Stirnseite 96, 196, 296 bis zu einem Bodenbereich 94, 194, an dem die Haltehülse 70 abgestützt ist. Zwischen dem Bodenbereich oder der Bodenwand 94, 194 und der freien, vom Haltevorsprung 82 abgewandten Stirnseite der Umfangswand 81 ist die Haltehülse 90 jeweils gehalten. Allerdings kann sich die jeweilige Haltehülse 70 frei in der Halteaufnahme 93, 193 drehen, so dass der Schlauchabschnitt 93 eine Rotationsbewegung um seine Längserstreckung L in dem jeweiligen Anschlussstück 90, 190, 290 machen kann.

Die Haltekörper 80 könnten in den Halteaufnahmen 93, 193, 293 beispielsweise verklebt oder anderweitig befestigt sein. Bevorzugt ist jedoch eine Verrastung mit beispielsweise Rastvorsprüngen 84, die beispielsweise vor die Umfangswand 81 vorstehen und im am Steckkörper 91, 191, 291 montierten Zustand des Haltekörpers 80 in Rastaufnahmen 97, 197, 297 des Steckkörpers 91, 191, 291 eingreifen.

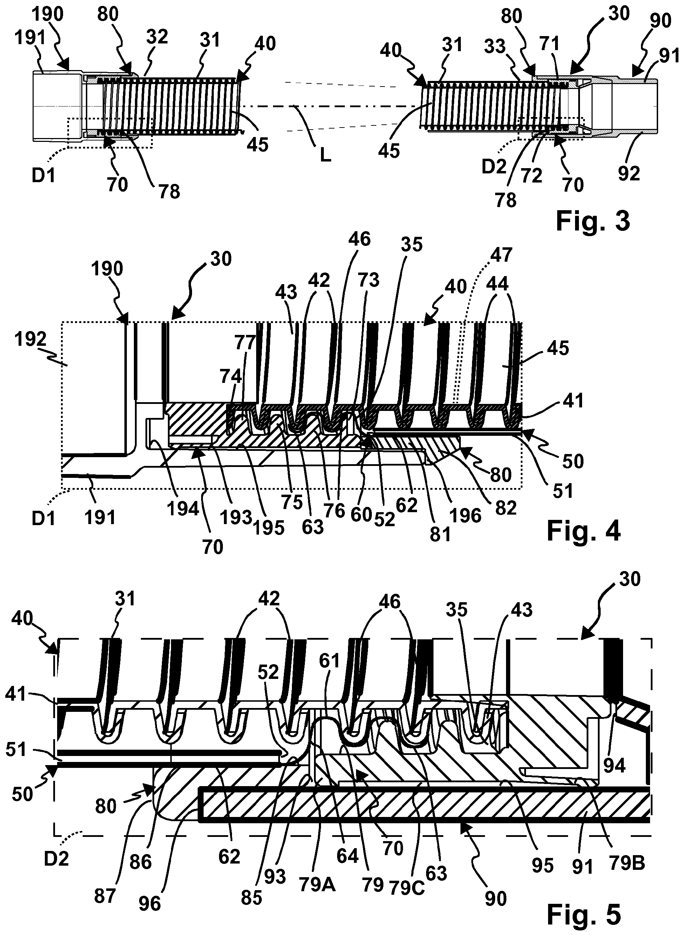

Es ist vorteilhaft, wenn zur freien Drehbarkeit bzw. Beweglichkeit einer jeweiligen Haltehülse 70 in der Halteaufnahme 93, 193, 293 Freisparungen und/oder Gleitvorsprünge vorgesehen sind. Beispielsweise hat die Haltehülse 70 (siehe Figur 5) nach radial außen vorstehende Gleitvorsprünge 79A, 79B, zwischen denen sich eine Freisparung 79C befindet. Die Gleitvorsprünge 79A, 79B liegen an der Innenumfangswand 95, 195 an und ermöglichen eine leichte Drehbarkeit der Haltehülse 70 in der jeweiligen Halteaufnahme 93, 193, 293.

Zur Befestigung des Schlauchabschnitts 31 an den Anschlussstücken 90, 190, 290 weisen die letztgenannten jeweils eine Schlauchaufnahme 35 auf. Die Schlauchaufnahme 35 ist im Wesentlichen durch die Haltehülse 70 definiert, kann aber optional auch durch den Haltekörper 80 bereitgestellt werden. Beispielsweise liegt der Mantel-Schlauchkörper 50 an einer Innenumfangswand 85 des Haltekörpers 80 an.

Der Haltekörper 80 ist vorzugsweise als eine Art Hülse ausgestaltet oder durch eine Hülse gebildet. Bevorzugt ist es, wenn ein Innendurchmesser einer Durchtrittsöffnung 86 des Haltekörpers 80, durch die der Schlauchabschnitt 31 einschließlich des Mantel-Schlauchkörpers 50 durchsteckbar ist, derart weit ist, dass diese Durchsteckbewegung nicht behindert wird. Mithin soll also die Stirnseite 52 des Mantel-Schlauchkörpers 50 nicht an der freien Stirnseite 87 des Haltekörpers 80 anschlagen, sondern bequem in die Durchtrittsöffnung 86 hinein gleiten. Das Durchstecken des Mantel-Schlauchkörpers 50 durch den Haltekörper 80 wird auch durch das später noch erläuterte Halteelement 60 erleichtert.

Der zugfeste Halt des Schlauchabschnitts 31 an den Anschlussstücken 90, 190, 290 wird hingegen im Wesentlichen durch die Haltehülse 70 geleistet. Man kann sich vorstellen, dass die Stirnseite 52 des Schlauchmantels 51 bzw. des Mantel-Schlauchkörpers 50 bei der Montage des Schlauchabschnitts 31 an dem jeweiligen Anschlussstück 90, 190, 290, insbesondere der Haltehülse 70, ein Hindernis darstellt und nicht ohne weiteres in das Anschlussstück 90, 190, 290 einführbar ist und zudem der Mantel-Schlauchkörper 50 am Anschlussstück 90, 190, 290 zugfest bezüglich der Steckachse SA und/oder Längserstreckung L gehalten ist..

Zur Beseitigung dieser Problemstellung ist das Halteelement 60 vorgesehen, welches mit einem Überdeckungsabschnitt 62 einen Befestigungsabschnitt 53 des Mantel-Schlauchkörpers 50 überdeckt, nämlich an einer Außenmantelfläche 54 des Schlauchmantels 51 angeordnet ist, und mit einem Überdeckungsabschnitt 63 am Montageabschnitt 43 befestigt ist bzw. den Schlauchmantel 41 des Staubabfuhr-Schlauchkörpers 40 überdeckt. Die Überdeckungsabschnitte 62, 63 sind vorzugsweise in Bezug auf die Längserstreckung L etwa gleich lang, weisen also Längen L1 und L2 (siehe Figur 6) auf. Es versteht sich, dass die Überdeckungsabschnitte 62, 63 auch unterschiedlich lang sein können.

Zwischen den Überdeckungsabschnitten 62, 63 ist eine Art Rampe 64 ausgebildet, die sich über die Stirnseite 52 des Mantel-Schlauchkörpers 50, also dem Montageabschnitt 43 zugewandt, erstreckt. Dadurch gleitet das Längsende 32, 33 des Schlauchabschnitts 31 leichter in die Schlauchaufnahme 35 ein, beispielsweise schon in die Durchtrittsöffnung 86 des Haltekörpers 80. Aber auch die weitere Montage bzw. der Halt an der Haltehülse 70 wird dadurch erleichtert.

Das Halteelement 60 bzw. der Bandkörper 61 wird vorzugsweise von einem Klebeband 65 gebildet, mit welchem der Schlauchmantel 51 umwickelt wird. Das Klebeband 65 haftet durch eine in der Zeichnung nicht sichtbare, dem Schlauchmantel 51, 41 zugewandte Klebeseite an den Schlauchmänteln 41, 51 an. Zum besseren Verständnis ist das Halteelement 60 in Bezug auf das Längsende 31 in Figur 6 mit einem Stoß dargestellt, d.h. man erkennt in der Zeichnung ein Längsende 65 des Klebebands 65.

Das Textilgeflecht 55 lässt sich durch das Klebeband 65 bequem komprimieren, so dass ein Außendurchmesser des Schlauchmantels 51 einschließlich des darauf angebrachten Halteelements 60 im Bereich der Schlauchaufnahme 35 bzw. im Bereich des Halteelements 60 kleiner ist als abseits davon, beispielsweise zum jeweils anderen Längsende 32, 33 hin. In der Zeichnung ist dies jedoch nicht dargestellt. Vielmehr ist das Halteelement 60 beispielsweise in Figur 6 nur schematisch angedeutet, wobei die Kompression des Textilgeflechts 55 oder des Schlauchmantels 51 nicht dargestellt sind.

Die Längsenden 32, 33 des Schlauchabschnitts 31 sind weiterhin mit den Haltehülsen 70 verschraubt. Die Haltehülsen 70 umfassen beispielsweise eine Umfangswand 71, die eine Aufnahmeöffnung 72 zum Einstecken oder Einschrauben oder beides des Längsendes 32, 33 des Schlauchabschnitts 31 bereitstellt. Die Aufnahmeöffnung 72 ist am freien Endbereich einer Aufnahme 78 für das jeweilige Längsende 32, 33 vorgesehen. Die Aufnahme 78 wird durch die Innenumfangsfläche 73 der Umfangswand 71 sowie dem Bodenbereich 74 begrenzt.

Eine Montagemöglichkeit bestünde nun darin, das jeweilige Längsende 32, 33 in die Aufnahme 78 einzustecken und dort zu verkleben.

Für eine Einstecken des Längsendes 32, 33 ist es vorteilhaft, dass die Innenumfangsfläche 73 vorzugsweise einen konischen Verlauf aufweist, d.h. dass sie im Bereich der Aufnahmeöffnung 72 einen größeren Querschnitt aufweist als im Bodenbereich 74. Vorliegend ist der konische Verlauf im Wesentlichen durch ein Schraubgewinde eines Gewindeabschnitts 75 definiert. Die Innenumfangsfläche 73 könnte anders als in der Zeichnung dargestellt aber auch flächig oder glatt sein, d. h. kein Schraubgewinde aufweisen.

Die Verstärkungsspirale 44 oder die Verstärkungsrippen 42 sind, wie erwähnt, im Wesentlichen spiralig ausgestaltet. Sie bilden eine Schraubkontur 46 aus, die im Bereich des Montageabschnitts 43 des Staubabfuhr-Schlauchkörpers 40 mit dem Gewindeabschnitt 75 verschraubt werden kann.

Schraubwindungen 76 des Gewindeabschnitts 75, die sich näher bei der Aufnahmeöffnung 72 befinden, haben einen größeren Durchmesser als eine oder mehrere Schraubwindungen 77 nahe beim Bodenbereich 74. Dadurch wird ein im Wesentlichen konischer und/oder sich verengender Verlauf der Aufnahme 78 definiert derart, dass das Halteelement 60 mit dem Überdeckungsabschnitt 63 zunächst in Eingriff mit den Schraubenwindungen 76 gelangt und dann fortlaufend komprimiert wird, bis der Überdeckungsabschnitt 63 im Bereich der Schraubenwindungen 77 seinen engsten Bereich vorfindet. Dadurch wird das Halteelement 60 verformt und legt sich zwischen den Gewindeabschnitt 75 und die Schraubkontur 46, so dass das Halteelement 60 formschlüssig in der Gewindestruktur, die durch den Gewindeabschnitt 75 und der Schraubkontur 46 ausgebildet ist, gehalten ist.

Zugleich erfährt auch der Überdeckungsabschnitt 62 am Innenumfang des Haltekörpers 80, also am Innenumfang der Umfangswand 81, vorzugsweise eine Kompression, so dass er besonders gut am Schlauchmantel 51 hält.

Es versteht sich, dass anders als in den Figuren 4 und 5 dargestellt, sich der Schlauchmantel 51 des Mantel-Schlauchkörpers 50 bis in die Aufnahme 78 hinein erstrecken kann, so dass er beispielsweise in einem Bereich 79 der Aufnahme 78 zu liegen kommt und dort zwischen dem Schlauchmantel 41 und der Innenumfangswand oder Innenumfangsfläche 73 sandwichartig zu liegen kommt. Insbesondere ist durch diese Maßnahme die Montage des Haltekörpers 80 erleichtert, weil das jeweilige Längsende 32, 33 vollständig in der Haltehülse 70 gehalten ist, bevor der Haltekörper 80 mit dem Steckkörper 91, 191, 291 verbunden wird.

Ein alternatives Konzept für ein Halteelement ist in Figur 6 schematisch angedeutet. Anstelle des Bandkörpers 61 kann beispielsweise ein Halteelement 160 vorgesehen sein, das in der Art eines Blechteils oder einer Klammer ausgestaltet ist. Das Halteelement 160 umfasst beispielsweise einen Metallkörper 163. Insbesondere besteht die Klammer oder das Halteelement 160 aus Metall, vorzugsweise aus Leichtmetall, Aluminium oder dergleichen. Das Halteelement 160 weist einen Überdeckungsabschnitt 162 auf, der an der Außenmantelfläche 54 des Mantel-Schlauchkörpers 50 befestigt ist, beispielsweise verklebt, vercrimpt oder dergleichen. Von dem Überdeckungsabschnitt 161 steht ein Rampenabschnitt oder Vorsprungabschnitt 162 ab, der die Stirnseite 52 des Schlauchmantels 51 überdeckt. Das Halteelement 160 kann beispielsweise ringförmig sein und die Stirnseite 62 ringförmig überdecken. Es ist aber auch möglich, dass das Halteelement 60 nur ein Teilsegment des Außenumfangs des Schlauchmantels 51 überdeckt.

Beim Ablängen des Schlauchmantels 51 des Mantel-Schlauchkörpers 50 wird zweckmäßigerweise ein Ablängwerkzeug SW verwendet (Figur 6). Das Ablängwerkzeug SW weist beispielsweise einen Klingenkörper und/oder einen thermisch erhitzbaren Körper auf. Durch eine thermische Erhitzung des aus Kunststoff bestehenden Schlauchmantels 51, beispielsweise des Textilgeflechts 55, tritt ein Schrumpfungseffekt auf, d.h. dass der Durchmesser des Schlauchmantels 51 im Bereich der Stirnseite 52 kleiner ist als in einem Längsabstand dazu, d.h. in einem von der Stirnseite 52 entfernten Bereich. Ein durch die Ablängung mit dem Ablängwerkzeug SW im Durchmesser kleinerer Bereich 58 nahe bei der Stirnseite 52 ist in Figur 8 angedeutet.

Der Staubabfuhr-Schlauchkörper 40 und/oder der Mantel-Schlauchkörper 50 sind zweckmäßigerweise elektrisch leitfähig. Beispielsweise bestehen die Schlauchmäntel 41, 51 oder beide aus einem elektrisch leitfähigen Material, weisen elektrisch leitfähige Beschichtungen, Kohlefasern oder dergleichen auf. Auch das Halteelement 60, 160 ist zweckmäßigerweise elektrisch leitfähig, beispielsweise durch eine Kohle-Beschichtung bzw. Graphit-Beschichtung, durch Metallkomponenten oder dergleichen. Dadurch ist eine antistatische Ableitung möglich. Die Schraubenwindungen 77 oder die mindestens eine Schraubenwindung 77 ist zweckmäßigerweise ebenfalls elektrisch leitfähig, sodass sie einen elektrischen Kontakt von dem jeweiligen Anschlussstück 90, 190, 290 zu dem Halteelement 60 und über dieses wiederum zu dem Staubabfuhr-Schlauchkörper 40 und/oder dem Mantel-Schlauchkörper 50 herstellt.

Es ist auch möglich, dass der Staubabfuhr-Schlauchkörper 40 einen Verstärkungskörper 47 in Gestalt einer Drahtspirale oder dergleichen aufweist (in Figur 4 angedeutet). Auch diese kann als elektrisch leitfähige Komponente dienen.

In den Figuren 8 und 9 ist noch ein Ausführungsbeispiel dargestellt, bei dem an dem Längsende 33 des Schlauchabschnitts 31 ein Schrumpfkörper 261 als ein Halteelement 260 angeordnet ist. Der Schrumpfkörper 261 ist beispielsweise in der Art einer Tülle oder Hülse ausgestaltet. Er kann ihm noch unverformten Zustand über seine gesamte Längserstreckung denselben Querschnitt aufweisen. Es ist auch möglich, dass der Schrumpfkörper 261 eine stufige oder konische Gestalt aufweist, derart, dass er vom freien Längsende des Montageabschnitts 43 auf das jeweilige Längsende 32 oder 33 aufgesteckt werden kann, aber in einem Abschnitt 263, also im Bereich des Montageabschnitts 43, einen kleineren Querschnitt aufweist als in einem zur Aufnahme des Mantel-Schlauchkörpers 50 vorgesehenen Abschnitt 262.

Der Schrumpfkörper 261 besteht aus einem bei thermischer Beaufschlagung, insbesondere Erhitzung, schrumpfenden Material, beispielsweise einem Kunststoff. Der Schrumpfkörper 261 weist einen Überdeckungsabschnitt 262 auf, welcher an dem Befestigungsabschnitt 53 an der Außenmantelfläche 54 des Mantel-Schlauchkörpers 50 angeordnet ist. Ein weiterer Überdeckungsabschnitt 263, der sich an den Überdeckungsabschnitt 262 anschließt, überdeckt den Montageabschnitt 43 des Schlauchmantels 41 bzw. des Staubabfuhr-Schlauchkörpers 40. Zwischen den Überdeckungsabschnitt den 262 und 263 bildet sich eine Rampe 264 aus, wenn der Schrumpfkörper 271 durch ein Erhitzungswerkzeug E, beispielsweise einen Föhn, mit einem Hitzestrahl H erhitzt wird. Zudem schrumpft der Schrumpfkörper auf die Schraubkontur 46 derart auf, dass der Schrumpfkörper 261 die Schraubkontur 46 zumindest teilweise plastisch abbildet und/oder deren Kontur annimmt und somit der mit dem Schrumpfkörper 261 ummantelte Montageabschnitt 43 in den Gewindeabschnitt 75 einschraubbar ist.

Der Überdeckungsabschnitt 262 schrumpft durch Hitzebehandlung mit dem Erhitzungswerkzeug E ebenfalls, sodass er auf dem Befestigungsabschnitt 53 des Schlauchmantels 51 fest sitzt.

Vorteilhaft ist vorgesehen, dass der Überdeckungsabschnitt 262 den Befestigungsabschnitt 53 des Schlauchmantels 51 komprimiert und dessen Querschnitt kleiner wird. Auch diese Maßnahme trägt dazu bei, dass das Längsende 33 oder 32 leichter an dem jeweiligen Anschlussstück 90, 190, 290, insbesondere die Haltehülse 70, montierbar oder befestigbar ist.

An dieser Stelle sei erwähnt, dass auch das Umwickeln des Längsendes 32, 33 mit dem Bandkörper 61 eine derartige Kompression des Befestigungsabschnitts 53 bewirken kann. Zudem kann das Klebeband 65 ohne weiteres auch die Schraubkontur 46 zumindest teilweise plastisch abbilden und/oder deren Kontur annehmen, sodass der mit dem Klebeband 65 ummantelte Montageabschnitt 43 in den Gewindeabschnitt 75 einschraubbar ist.

## Patentansprüche

1. Saugschlauch für einen Staubsauger (10), insbesondere zum Betrieb mit einer Hand-Werkzeugmaschine (20), mit einem Schlauchabschnitt (31), der einen flexiblen Staubabfuhr-Schlauchkörper (40) einen flexiblen Mantel-Schlauchkörper (50) aufweist, in welchem der Staubabfuhr-Schlauchkörper (40) angeordnet ist, wobei sich zwischen Längsenden (32, 33) des Schlauchabschnitts (31) ein durch einen Schlauchmantel (41) des Staubabfuhr-Schlauchkörpers (40) begrenzter Saugstromkanal (45) zum Führen eines Saugstroms (S) zu dem Staubsauger (10) erstreckt, wobei an mindestens einem Längsende (32, 33) des Schlauchabschnitts (31) ein Anschlussstück (90; 190; 290) zum Anschließen an die Hand-Werkzeugmaschine (20) oder den Staubsauger (10) angeordnet ist, und wobei sich der Mantel-Schlauchkörper (50) und der Staubabfuhr-Schlauchkörper (40) einen Innenraum einer Schlauchaufnahme (35) des Anschlussstücks (90; 190; 290) hinein erstrecken, sodass der Staubabfuhr-Schlauchkörper (40) bis in die Schlauchaufnahme (35) hinein durch den Mantel-Schlauchkörper (50) ummantelt ist, **dadurch gekennzeichnet, dass** in der Schlauchaufnahme (35) ein Montageabschnitt (43) des Staubabfuhr-Schlauchkörpers (40) vor den Mantel-Schlauchkörper (50) vorsteht, und dass an einer Außenmantelfläche (54) des Mantel-Schlauchkörpers (50) ein Halteelement (60) befestigt ist, welches eine zum Montageabschnitt (43) des Staubabfuhr-Schlauchkörpers (40) hin freie Stirnseite (52) des Mantel-Schlauchkörpers (50) überdeckt und das Halteelement (60) an einer Innenfläche der Schlauchaufnahme (35) anliegt.

2. Saugschlauch nach Anspruch 1, **dadurch gekennzeichnet, dass** sich das Halteelement (60) über den gesamten Umfang oder über einen Teilumfang des Mantel-Schlauchkörpers (50) erstreckt.

3. Saugschlauch nach Anspruch 1 oder 2, **dadurch gekennzeichnet, dass** das Halteelement (60) im am Mantel-Schlauchkörper (50) montierten Zustand eine ringförmige oder hülsenförmige Gestalt aufweist und/oder dass das Halteelement (60) ein durch das Anschlussstück (90; 190; 290) bei der Montage des Anschlussstücks (90; 190; 290) an dem Schlauchabschnitt (31), insbesondere plastisch und/oder flexibel, verformbares Halteelement (60) ist und/oder dass das Halteelement (60) an dem Mantel-Schlauchkörper (50) und/oder dem Staubabfuhr-Schlauchkörper (40), insbesondere durch eine Verklebung oder eine Klebeschicht, befestigt ist.

4. Saugschlauch nach einem der vorhergehenden Ansprüche, **dadurch gekennzeichnet, dass** das Halteelement (60) sich parallel zur Längserstreckung (L) des Saugstromkanals (45) zumindest über einen Teilabschnitt des Montageabschnitts (43) des Staubabfuhr-Schlauchkörpers (40) erstreckt und/oder dass das Halteelement (60) den Mantel-Schlauchkörper (50) in Richtung des Staubabfuhr-Schlauchkörpers (40) komprimiert.

5. Saugschlauch nach einem der vorhergehenden Ansprüche, **dadurch gekennzeichnet, dass** das Halteelement (60) im Bereich der freien Stirnseite (52) des Mantel-Schlauchkörpers (50) eine Rampe (64) zum Aufgleiten des Anschlussstücks (90; 190; 290) auf den Mantel-Schlauchkörper (50) bei der Montage, insbesondere beim Aufstecken oder Aufschrauben, des Anschlussstücks (90; 190; 290) an dem Schlauchabschnitt (31) aufweist.

6. Saugschlauch nach einem der vorhergehenden Ansprüche, **dadurch gekennzeichnet, dass** das Halteelement (60) einen Bandkörper (61), insbesondere ein Klebeband (65) oder ein Kunststoffklebeband oder ein Metallklebeband, umfasst oder dadurch gebildet ist und/oder dass das Halteelement (60) einen Metallkörper (163), insbesondere ein Blechteil und/oder ein Klebeband (65) aus Metall umfasst oder dadurch gebildet ist.

7. Saugschlauch nach einem der vorhergehenden Ansprüche, **dadurch gekennzeichnet, dass** das Halteelement (60) ein Schrumpfkörper (261) ist oder einen Schaumkörper umfasst, welcher durch thermische Behandlung, insbesondere Erwärmung, auf den Mantel-Schlauchkörper (50) zu einem Halten an dem Mantel-Schlauchkörper (50) und/oder dem Staubabfuhr-Schlauchkörper (40) aufgeschrumpft ist.

8. Saugschlauch nach einem der vorhergehenden Ansprüche, **dadurch gekennzeichnet, dass** das Halteelement (60) zur Herstellung einer elektrischen Verbindung zwischen mindestens zwei der Komponenten Anschlussstück (90; 190; 290), Mantel-Schlauchkörper (50) und Staubabfuhr-Schlauchkörper (40) elektrisch leitfähig ist, insbesondere eine elektrisch leitfähige Beschichtung aufweist, und/oder dass das Halteelement (60) eine elektrisch leitfähige Metallfolie aufweist oder dadurch gebildet ist und/oder dass der Staubabfuhr-Schlauchkörper (40) und/oder der Mantel-Schlauchkörper (50) elektrisch leitfähig ist und/oder einen elektrisch leitfähigen Kunststoff aufweist oder dadurch gebildet ist und/oder mindestens einen elektrisch leitfähigen Draht aufweist.

9. Saugschlauch nach einem der vorhergehenden Ansprüche, **dadurch gekennzeichnet, dass** der Schlauchmantel (41) des Staubabfuhr-Schlauchkörpers (40) mindestens eine Kunststoffwand und/oder mindestens einen Verstärkungskörper (47) und/oder mindestens eine Verstärkungsspirale (44), insbesondere aus Metall oder gegenüber einer Basiswand des Schlauchmantels (41) steiferem Kunststoff, aufweist und/oder dass der Schlauchmantel (41) des Staubabfuhr-Schlauchkörpers (40) mindestens eine, insbesondere spiralig verlaufende, Rippenstruktur aufweist und/oder der Mantel-Schlauchkörper (50) aus Textilfasern (56, 57) besteht und/oder ein Textilgeflecht (55) aufweist und/oder als ein Multifilament bestehend aus härteren und weicheren, miteinander verflochtenen Fasern (56, 57) ausgebildet ist.

10. Saugschlauch nach einem der vorhergehenden Ansprüche, **dadurch gekennzeichnet, dass** die zum Montageabschnitt (43) des Staubabfuhr-Schlauchkörpers (40) hin freie Stirnseite (52) des Mantel-Schlauchkörpers (50) einen kleineren Durchmesser aufweist als ein von dem Montageabschnitt (43) des Staubabfuhr-Schlauchkörpers (40) entfernterer Abschnitt des Mantel-Schlauchkörpers (50) aufweist, wobei vorteilhaft vorgesehen ist, dass der kleinere Durchmesser anhand einer thermischen Bearbeitung und/oder durch ein Ablängen und/oder ein Verschweißen des Mantel-Schlauchkörpers (50) hergestellt ist.

11. Saugschlauch nach einem der vorhergehenden Ansprüche, **dadurch gekennzeichnet, dass** zumindest der Montageabschnitt (43) des Staubabfuhr-Schlauchkörpers (40), vorzugsweise auch der Mantel-Schlauchkörper (50), in einer Haltehülse (70) des Anschlussstücks (90; 190; 290) aufgenommen ist, die in einer Halteaufnahme (93) eines von der Haltehülse (70) separaten Steckkörpers (91, 191, 291) des Anschlussstücks (90; 190; 290), insbesondere frei drehbar, aufgenommen ist und insbesondere durch einen hülsenförmigen oder ringförmigen Haltekörper (80) an dem Steckkörper (91, 191, 291) gehalten ist, wobei der Steckkörper (91, 191, 291) einen Steckabschnitt zum Anstecken an, insbesondere zum Einstecken in, eine Steckaufnahme der Hand-Werkzeugmaschine (20) oder des Staubsaugers (10) aufweist.

12. Saugschlauch nach einem der vorhergehenden Ansprüche, **dadurch gekennzeichnet, dass** die Schlauchaufnahme (35) eine Aufnahmeöffnung (72) zum Einstecken des Schlauchabschnitts (31) und einen von der Aufnahmeöffnung (72) entfernteren Bodenbereich (74) oder Endbereich aufweist, wobei vorteilhaft vorgesehen ist, dass die Aufnahmeöffnung (72) einen größeren Querschnitt aufweist als der Bodenbereich (74) oder Endbereich und/oder sich der Innenraum von der Aufnahmeöffnung (72) her zu dem Bodenbereich (74) oder Endbereich hin verengt, insbesondere konisch verläuft.

13. Saugschlauch nach einem der vorhergehenden Ansprüche, **dadurch gekennzeichnet, dass** die Schlauchaufnahme (35) mindestens einen Gewindeabschnitt (75) zum Einschrauben einer am Außenumfang des Staubabfuhr-Schlauchkörpers (40) angeordneten Schraubkontur (46) aufweist, wobei vorteilhaft vorgesehen ist, dass das mindestens eine Halteelement (60) im Bereich des Gewindeabschnitts (75) angeordnet und durch den Gewindeabschnitt (75) schraubenförmig verformt ist und/oder dass der Gewindeabschnitt (75) im Bereich einer zum Einführen des Schlauchabschnitts (31) vorgesehenen Aufnahmeöffnung (72) der Schlauchaufnahme (35) einen größeren Durchmesser als an einem von der Aufnahmeöffnung (72) entfernteren Bodenbereich (74) oder Endbereich der Schlauchaufnahme (35) aufweist.

14. System mit einem Saugschlauch gemäß der vorstehenden Ansprüche sowie einem Staubsauger (10) und/oder einer Hand-Werkzeugmaschine (20) als einem Endgerät, das einen Anschluss für den Saugschlauch (30) aufweist.

15. Verfahren zur Herstellung eines Saugschlauchs (30) für einen Staubsauger (10), insbesondere zum Betrieb mit einer Hand-Werkzeugmaschine (20), wobei der Saugschlauch (30) einen Schlauchabschnitt (31) aufweist, der einen flexiblen Staubabfuhr-Schlauchkörper (40) einen flexiblen Mantel-Schlauchkörper (50) aufweist, in welchem der Staubabfuhr-Schlauchkörper (40) angeordnet ist, wobei sich zwischen Längsenden (32, 33) des Schlauchabschnitts (31) ein durch einen Schlauchmantel (41) des Staubabfuhr-Schlauchkörpers (40) begrenzter Saugstromkanal (45) zum Führen eines Saugstroms (S) zu dem Staubsauger (10) erstreckt, wobei an mindestens einem Längsende (32, 33) des Schlauchabschnitts (31) ein Anschlussstück (90; 190; 290) zum Anschließen an die Hand-Werkzeugmaschine (20) oder den Staubsauger (10) angeordnet ist, und wobei sich der Mantel-Schlauchkörper (50) und der Staubabfuhr-Schlauchkörper (40) einen Innenraum einer Schlauchaufnahme (35) des Anschlussstücks (90; 190; 290) hinein erstrecken, sodass der Staubabfuhr-Schlauchkörper (40) bis in die Schlauchaufnahme (35) hinein durch den Mantel-Schlauchkörper (50) ummantelt ist, **gekennzeichnet durch**,
- Anordnen des Mantel-Schlauchkörpers (50) und des Staubabfuhr-Schlauchkörpers (40) aneinander oder Ablängen des Mantel-Schlauchkörpers (50) derart, dass in der Schlauchaufnahme (35) ein Montageabschnitt (43) des Staubabfuhr-Schlauchkörpers (40) vor den Mantel-Schlauchkörper (50) vorsteht,
- Befestigen eines Halteelements (60) an einer Außenmantelfläche (54) des Mantel-Schlauchkörpers (50) ein Halteelement (60) derart, dass das Halteelement (60) eine zum Montageabschnitt (43) des Staubabfuhr-Schlauchkörpers (40) hin freie Stirnseite (52) des Mantel-Schlauchkörpers (50) überdeckt und
- Einstecken des Montageabschnitts (43) und des Mantel-Schlauchkörpers (50) mit dem Halteelement (60) in die Schlauchaufnahme (35), sodass das Halteelement (60) an einer Innenfläche der Schlauchaufnahme (35) anliegt.

## Claims

1. Suction hose for a vacuum cleaner (10), in particular for operation with a hand-held power tool (20), comprising a hose portion (31) having a flexible dust removal hose body (40) and a flexible jacket hose body (50), in which the dust removal hose body (40) is located, wherein a suction flow channel (45) for conducting a suction flow (S) to the vacuum cleaner (10) extends between longitudinal ends (32, 33) of the hose portion (31), which suction flow channel (45) is bounded by a hose jacket (41) of the dust removal hose body (40), wherein a connection piece (90; 190; 290) for connection to the hand-held power tool (20) or to the vacuum cleaner (10) is arranged at at least one longitudinal end (32, 33) of the hose portion (31), and wherein the jacket hose body (50) and the dust removal hose body (40) extend into an interior of a hose receptacle (35) of the connection piece (90; 190; 290), so that the dust removal hose body (40) is sheathed by the jacket hose body (50) into the hose receptacle (35), **characterised in that** a mounting section (43) of the dust removal hose body (40) protrudes beyond the jacket hose body (40) in the hose receptacle (35), and **in that** a holding element (60) is fastened to an outer jacket surface (54) of the jacket hose body (50), which holding element (60) covers an end face (52) of the jacket hose body (50), which end face (52) is free towards the mounting section (43) of the dust removal hose body (40), the holding element (60) lying against an inner surface of the hose receptacle (35).

2. Suction hose according to claim 1, **characterised in that** the holding element (60) extends along the entire circumference or along a part of the circumference of the jacket hose body (50).

3. Suction hose according to claim 1 or 2, **characterised in that** the holding element (60) has an annular or sleeve-type shape when mounted on the jacket hose body (50) and/or **in that** the holding element (60) is a holding element (60) which can be deformed, in particular plastically and/or flexibly, by the connection piece (90; 190; 290) while the connection piece (90; 190; 290) is being fitted to the hose portion (31) and/or **in that** the holding element (60) is secured to the jacket hose body (50) and/or to the dust removal hose body (40), in particular by bonding or an adhesive layer.

4. Suction hose according to any of the preceding claims, **characterised in that** the holding element (60) extends parallel to the longitudinal dimension (L) of the suction flow channel (45) at least along a subsection of the mounting section (43) of the dust removal hose body (40) and/or **in that** the holding element (60) compresses the jacket hose body (50) in the direction of the dust removal hose body (40).

5. Suction hose according to any of the preceding claims, **characterised in that** the holding element (60) has in the region of the free end face (52) of the jacket hose body (50) a ramp (64) for the connection piece (90; 190; 290) to slide onto the jacket hose body (50) during assembly, in particular when plugging or screwing the connection piece (90; 190; 290) onto the hose portion (31).

6. Suction hose according to any of the preceding claims, **characterised in that** the holding element (60) comprises or is represented by a tape body (61), in particular an adhesive tape (65) or a plastic adhesive tape or a metal adhesive tape and/or **in that** the holding element (60) comprises or is represented by a metal body (163), in particular a sheet metal part and/or a metal adhesive tape (65).

7. Suction hose according to any of the preceding claims, **characterised in that** the holding element (60) comprises or is a shrinkable body (261) which is shrunk by thermal treatment, in particular by heating, onto the jacket hose body (50) for a hold on the jacket hose body (50) and/or the dust removal hose body (40).

8. Suction hose according to any of the preceding claims, **characterised in that** the holding element (60) is electrically conductive, having an electrically conductive coating in particular, for establishing an electric connection between at least two of the components connection piece (90; 190; 290), jacket hose body (50) and dust removal hose body (40) and/or **in that** the holding element (60) has or is represented by an electrically conductive metal foil and/or **in that** the dust removal hose body (40) and/or the jacket hose body (50) is/are electrically conductive and/or has/have and/or is/are represented by an electrically conductive plastic material and/or has/have at least one electrically conductive wire.

9. Suction hose according to any of the preceding claims, **characterised in that** the hose jacket (41) of the dust removal hose body (40) has at least one plastic wall and/or at least one reinforcement body (47) and/or at least one reinforcement spiral (44), in particular made of metal or of a plastic material which is more rigid than a base wall of the hose jacket (41) and/or the hose jacket (41) of the dust removal hose body (40) has at least one rib structure extending helically in particular and/or **in that** the jacket hose body (50) consists of textile fibres (56, 57) and/or has a textile mesh (55) and/or is designed as a multifilament consisting of interwoven harder and softer fibres (56, 57).

10. Suction hose according to any of the preceding claims, **characterised in that** the end face (52) of the jacket hose body which is free towards the mounting section (43) of the dust removal hose body (40) has a smaller diameter than a section of the jacket hose body (50) which is more distant from the mounting section (43) of the dust removal hose body (40), wherein it is preferably provided that the smaller diameter is particular produced by a thermal treatment and/or by a crosscut and/or by a welding of the jacket hose body (50).

11. Suction hose according to any of the preceding claims, **characterised in that** at least the mounting section (43) of the dust removal hose body (40) and preferably the jacket hose body (50) as well is/are accommodated in a holding sleeve (70) of the connection piece (90; 190; 290) which is accommodated, in particular freely rotatably, in a holding receptacle (93) of a plug-in body (91, 191, 291) of the connection piece (90; 190; 290) which is separate from the holding sleeve (70) and in particular held to the plug-in body (91, 191, 291) by a sleeve-shaped or annular holding body (80), the plug-in body (91, 191, 291) having a plug-in section for plugging onto and in particular into a plug-in receptacle of the hand-held power tool (20) or the vacuum cleaner (10).

12. Suction hose according to any of the preceding claims, **characterised in that** the hose receptacle (35) has a reception opening (72) for inserting the hose portion (31) and a base region (74) or end region remote from the reception opening (72), wherein it is preferably provided that the reception opening (72) has a larger cross-section than the base region (74) or end region and/or the interior narrows from the receptacle opening (72) towards the base region (74) or end region, in particular conically.

13. Suction hose according to any of the preceding claims, **characterised in that** hose receptacle (35) has at least one threaded section (75) for screwing in a screw contour (46) located at the outer circumference of the dust removal hose body (40), wherein it is preferably provided that the at least one holding element (80) is located in the region of the threaded section (75) and deformed helically by the threaded section (75) and/or that the threaded section (75) has a larger diameter in the region of a reception opening (72) of the hose receptacle (35) provided for inserting the hose portion (31) than in a base region (74) or end region of the hose receptacle (35) more remote from the reception opening.

14. System with a suction hose according to the previous claims and a vacuum cleaner (10) and/or a hand-held power tool (20) as a terminal device having a connection for the suction hose (30).

15. Method for producing a suction hose (30) for a vacuum cleaner (10), in particular for operation with a hand-held power tool (20), wherein the suction hose (30) comprises a hose portion (31) having a flexible dust removal hose body (40) and a flexible jacket hose body (50), in which the dust removal hose body (40) is located, wherein a suction flow channel (45) for conducting a suction flow (S) to the vacuum cleaner (10) extends between longitudinal ends (32, 33) of the hose portion (31), which suction flow channel (45) is bounded by a hose jacket (41) of the dust removal hose body (40), wherein a connection piece (90; 190; 290) for connection to the hand-held power tool (20) or to the vacuum cleaner (10) is arranged at at least one longitudinal end (32, 33) of the hose portion (31), and wherein the jacket hose body (50) and the dust removal hose body (40) extend into an interior of a hose receptacle (35) of the connection piece (90; 190; 290), so that the dust removal hose body (40) is sheathed by the jacket hose body (50) into the hose receptacle, **characterised by**
- the arrangement of the jacket hose body (50) and the dust removal hose body (40) relative to each other or the crosscutting of the jacket hose body (50) in such a way that a mounting section (43) of the dust removal hose body (40) projects in front of the jacket hose body (50) in the hose receptacle (35),
- the fixing of a holding element (60) to an outer jacket surface (54) of the jacket hose body (50) in such a way that the holding element (60) covers an end face (52) of the jacket hose body (50), which end face (52) is free towards the mounting section (43) of the dust removal hose body (40), and
- the insertion of the mounting section (43) and the jacket hose body (50) with the holding element (60) into the hose receptacle (35), so that holding element (60) lies against an inner surface of the hose receptacle (35).

## Revendications

1. Tuyau flexible d'aspiration pour un aspirateur (10), en particulier pour fonctionner avec une machine-outil manuelle (20), avec une section de tuyau flexible (31), qui présente un corps de tuyau flexible d'évacuation de poussières (40) flexible, un corps de tuyau flexible d'enveloppe (50) flexible, dans lequel est disposé le corps de tuyau flexible d'évacuation de poussières (40), dans lequel un canal de flux aspiré (45) délimité par une enveloppe de tuyau flexible (41) du corps de tuyau flexible d'évacuation de poussières (40) pour guider un flux aspiré (S) vers l'aspirateur (10) s'étend entre des extrémités longitudinales (32, 33) de la section de tuyau flexible (31), dans lequel une pièce de raccordement (90 ; 190; 290) destinée à être raccordée à la machine-outil manuelle (20) ou à l'aspirateur (10) est disposée sur au moins une extrémité longitudinale (32, 33) de la section de tuyau flexible (31), et dans lequel le corps de tuyau flexible d'enveloppe (50) et le corps de tuyau flexible d'évacuation de poussières (40) s'étendent à l'intérieur d'un espace intérieur d'un logement de tuyau flexible (35) de la pièce de raccordement (90 ; 190 ; 290) de sorte que le corps de tuyau flexible d'évacuation de poussière (40) est enveloppé jusqu'à l'intérieur du logement de tuyau flexible (35) par le corps de tuyau flexible d'enveloppe (50), **caractérisé en ce qu'**une section de montage (43) du corps de tuyau flexible d'évacuation de poussières (40) fait saillie devant le corps de tuyau flexible d'enveloppe (50) dans le logement de tuyau flexible (35), et qu'est fixé sur une surface enveloppante extérieure (54) du corps de tuyau flexible d'enveloppe (50) un élément de maintien (60), lequel recouvre un côté frontal (52) libre, en direction de la section de montage (43) du corps de tuyau flexible d'évacuation de poussières (40), du corps de tuyau flexible d'enveloppe (50) et l'élément de maintien (60) repose sur une surface intérieure du logement de tuyau flexible (35).

2. Tuyau flexible d'aspiration selon la revendication 1, **caractérisé en ce que** l'élément de maintien (60) s'étend sur la totalité de la périphérie ou sur une périphérie partielle du corps de tuyau flexible d'enveloppe (50).

3. Tuyau flexible d'aspiration selon la revendication 1 ou 2, **caractérisé en ce que** l'élément de maintien (60) présente, dans l'état monté sur le corps de tuyau flexible d'enveloppe (50), une forme d'anneau ou de manchon, et/ou que l'élément de maintien (60) est un élément de maintien (60) pouvant être déformé, en particulier de manière plastique et/ou flexible, par la pièce de raccordement (90 ; 190 ; 290) lors du montage de la pièce de raccordement (90 ; 190 ; 290) sur la section de tuyau flexible (31), et/ou que l'élément de maintien (60) est fixé sur le corps de tuyau flexible d'enveloppe (50) et/ou sur le corps de tuyau flexible d'évacuation de poussières (40), en particulier par un collage ou une couche adhésive.

4. Tuyau flexible d'aspiration selon l'une quelconque des revendications précédentes, **caractérisé en ce que** l'élément de maintien (60) s'étend de manière parallèle par rapport à l'extension longitudinale (L) du canal de flux aspiré (45) au moins sur une section partielle de la section de montage (43) du corps de tuyau flexible d'évacuation de poussières (40), et/ou que l'élément de maintien (60) comprime le corps de tuyau flexible d'enveloppe (50) en direction du corps de tuyau flexible d'évacuation de poussières (40).

5. Tuyau flexible d'aspiration selon l'une quelconque des revendications précédentes, **caractérisé en ce que** l'élément de maintien (60) présente, dans la zone du côté frontal (52) libre du corps de tuyau flexible d'enveloppe (50), une rampe (64) destinée à faire glisser la pièce de raccordement (90 ; 190 ; 290) sur le corps de tuyau flexible d'enveloppe (50) lors du montage, en particulier lors de l'emboîtement ou du vissage, de la pièce de raccordement (90 ; 190 ; 290) sur la section de tuyau flexible (31).

6. Tuyau flexible d'aspiration selon l'une quelconque des revendications précédentes, **caractérisé en ce que** l'élément de maintien (60) comprend un corps de bande (61), en particulier une bande adhésive (65) ou une bande adhésive en matière plastique ou une bande adhésive métallique ou est formé à partir de ceux-ci, et/ou que l'élément de maintien (60) comprend un corps métallique (163), en particulier une partie de tôle et/ou une bande adhésive (65) composée de métal ou est formé à partir de ceux-ci.

7. Tuyau flexible d'aspiration selon l'une quelconque des revendications précédentes, **caractérisé en ce que** l'élément de maintien (60) est un corps rétractable (261) ou comprend un corps de mousse, lequel est fretté par un traitement thermique, en particulier par réchauffage, sur le corps de tuyau flexible d'enveloppe (50) pour un maintien sur le corps de tuyau flexible d'enveloppe (50) et/ou le corps de tuyau flexible d'évacuation de poussières (40).

8. Tuyau flexible d'aspiration selon l'une quelconque des revendications précédentes, **caractérisé en ce que** l'élément de maintien (60) est électriquement conducteur pour établir une liaison électrique entre au moins deux des composants parmi la pièce de raccordement (90 ; 190 ; 290), le corps de tuyau flexible d'enveloppe (50) et le corps de tuyau flexible d'évacuation de poussières (40), en particulier présente un revêtement électriquement conducteur, et/ou que l'élément de maintien (60) présente un film métallique électriquement conducteur ou en est formé, et/ou que le corps de tuyau flexible d'évacuation de poussières (40) et/ou le corps de tuyau flexible d'enveloppe (50) sont électriquement conducteurs et/ou présentent une matière plastique électriquement conductrice ou en sont formés et/ou comportent au moins un fil métallique électriquement conducteur.

9. Tuyau flexible d'aspiration selon l'une quelconque des revendications précédentes, **caractérisé en ce que** l'enveloppe de tuyau flexible (41) du corps de tuyau flexible d'évacuation de poussières (40) présente au moins une paroi en matière plastique et/ou au moins un corps de renforcement (47) et/ou au moins une spirale de renforcement (44), en particulier composée de métal ou d'une matière plastique plus rigide par rapport à une paroi de base de l'enveloppe de tuyau flexible (41), et/ou que l'enveloppe de tuyau flexible (41) du corps de tuyau flexible d'évacuation de poussières (40) présente au moins une structure nervurée, s'étendant en particulier à la manière d'une spirale et/ou le corps de tuyau flexible d'enveloppe (50) est constitué de fibres textiles (56, 57) et/ou présente un tissage en textile (55) et/ou est réalisé en tant qu'un multifilament constitué de fibres (56, 57) plus dures et plus souples, entrelacées les unes aux autres.

10. Tuyau flexible d'aspiration selon l'une quelconque des revendications précédentes, **caractérisé en ce que** le côté frontal (52) libre, en direction de la section de montage (43) du corps de tuyau flexible d'évacuation de poussières (40), du corps de tuyau flexible d'enveloppe (50) présente un diamètre plus petit qu'une section, plus éloignée de la section de montage (43) du corps de tuyau flexible d'évacuation de poussières (40), du corps de tuyau flexible d'enveloppe (50), dans lequel il est prévu de manière avantageuse que le diamètre plus petit est fabriqué à l'aide d'un traitement thermique et/ou par un découpage à la bonne longueur et/ou par un assemblage par soudage du corps de tuyau flexible d'enveloppe (50).

11. Tuyau flexible d'aspiration selon l'une quelconque des revendications précédentes, **caractérisé en ce qu'**au moins la section de montage (43) du corps de tuyau flexible d'évacuation de poussières (40), de préférence également le corps de tuyau flexible d'enveloppe (50), est logée dans un manchon de maintien (70) de la pièce de raccordement (90 ; 190 ; 290), qui est logé, en particulier de manière à pouvoir tourner librement, dans un logement de maintien (93) d'un corps d'enfichage (91, 191, 291), séparé du manchon de maintien (70), de la pièce de raccordement (90 ; 190 ; 290) et est maintenu en particulier par un corps de maintien (80) en forme de manchon ou en forme d'anneau sur le corps d'enfichage (91, 191, 291), dans lequel le corps d'enfichage (91, 191, 291) présente une section d'enfichage destinée à être appliquée par enfichage, en particulier à être enfichée, dans un logement d'enfichage de la machine-outil manuelle (20) ou de l'aspirateur (10).

12. Tuyau flexible d'aspiration selon l'une quelconque des revendications précédentes, **caractérisé en ce que** le logement de tuyau flexible (35) présente une ouverture de logement (72) pour enficher la section de tuyau flexible (31) et une zone de fond (74) ou une zone d'extrémité plus éloignée de l'ouverture de logement (72), dans lequel il est prévu de manière avantageuse que l'ouverture de logement (72) présente une section transversale plus grande que la zone de fond (74) ou la zone d'extrémité et/ou que l'espace intérieur se rétrécit, en particulier s'étend de manière conique, depuis l'ouverture de logement (72) vers la zone de fond (74) ou la zone d'extrémité.

13. Tuyau flexible d'aspiration selon l'une quelconque des revendications précédentes, **caractérisé en ce que** le logement de tuyau flexible (35) présente au moins une section filetée (75) pour visser un contour à visser (46) disposé sur la périphérie extérieure du corps de tuyau flexible d'évacuation de poussières (40), dans lequel il est prévu de manière avantageuse que l'au moins un élément de maintien (60) est disposé dans la zone de la section filetée (75) et est déformé de manière hélicoïdale par la section filetée (75), et/ou que la section filetée (75) présente dans la zone d'une ouverture de logement (72), prévue pour introduire la section de tuyau flexible (31), du logement de tuyau flexible (35) un diamètre plus grand que sur une zone de fond (74) ou zone d'extrémité, plus éloignée de l'ouverture de logement (72), du logement de tuyau flexible (35).

14. Système avec un tuyau flexible d'aspiration selon les revendications précédentes ainsi qu'avec un aspirateur (10) et/ou avec une machine-outil manuelle (20) en tant qu'un terminal, qui présente un raccord pour le tuyau flexible d'aspiration (30).

15. Procédé pour fabriquer un tuyau flexible d'aspiration (30) pour un aspirateur (10), en particulier pour fonctionner avec une machine-outil manuelle (20), dans lequel le tuyau flexible d'aspiration (30) présente une section de tuyau flexible (31), qui présente un corps de tuyau flexible d'évacuation de poussières (40) flexible, un corps de tuyau flexible d'enveloppe (50) flexible, dans lequel est disposé le corps de tuyau flexible d'évacuation de poussières (40), dans lequel un canal de flux aspiré (45) délimité par une enveloppe de tuyau flexible (41) du corps de tuyau flexible d'évacuation de poussières (40) pour guider un flux aspiré (S) vers l'aspirateur (10) s'étend entre des extrémités longitudinales (32, 33) de la section de tuyau flexible (31), dans lequel une pièce de raccordement (90 ; 190; 290) destinée à être raccordée à la machine-outil manuelle (20) ou à l'aspirateur (10) est disposée sur au moins une extrémité longitudinale (32, 33) de la section de tuyau flexible (31), et dans lequel le corps de tuyau flexible d'enveloppe (50) et le corps de tuyau flexible d'évacuation de poussières (40) s'étendent à l'intérieur d'un espace intérieur d'un logement de tuyau flexible (35) de la pièce de raccordement (90 ; 190 ; 290) si bien que le corps de tuyau flexible d'évacuation de poussières (40) est enveloppé par le corps de tuyau flexible d'enveloppe (50) jusqu'à l'intérieur du logement de tuyau flexible (35), **caractérisé par**
- la disposition du corps de tuyau flexible d'enveloppe (50) et du corps de tuyau flexible d'évacuation de poussières (40) l'un sur l'autre ou le découpage à la bonne longueur du corps de tuyau flexible d'enveloppe (50) de telle manière qu'une section de montage (43) du corps de tuyau flexible d'évacuation de poussières (40) fait saillie devant le corps de tuyau flexible d'enveloppe (50) dans le logement de tuyau flexible (35),
- la fixation d'un élément de maintien (60) sur une surface d'enveloppe extérieure (54) du corps de tuyau flexible d'enveloppe (50) un élément de maintien (60) de telle manière que l'élément de maintien (60) recouvre un côté frontal (52) libre, en direction de la section de montage (43) du corps de tuyau flexible d'évacuation de poussières (40), du corps de tuyau flexible d'enveloppe (50), et
- l'enfichage de la section de montage (43) et du corps de tuyau flexible d'enveloppe (50) avec l'élément de maintien (60) dans le logement de tuyau flexible (35) si bien que l'élément de maintien (60) repose sur une surface intérieure du logement de tuyau flexible (35).
